# EUROPEAN PATENT SPECIFICATION

(11) **EP 3 820 157 B1**
(45) Date of publication and mention of the grant of the patent: **21.05.2025**
(21) Application number: 19830769.6
(22) Date of filing: 28.06.2019
(51) Int. Cl.: H04Q 11/00

(54) **METHOD FOR MANAGING ONU, OLT, ONU, SYSTEM AND STORAGE MEDIUM**
VERFAHREN ZUR VERWALTUNG VON ONU, OLT, ONU, SYSTEM UND SPEICHERMEDIUM
PROCÉDÉ DE GESTION OLT, ONU, SYSTÈME ET SUPPORT D'INFORMATIONS

(30) Priority: 02.07.2018 CN 201810708838
(43) Date of publication of application: 12.05.2021
(73) Proprietor: ZTE Corporation, Shenzhen, Guangdong 518057 (CN)
(72) Inventor: ZHANG, Yangchun, Shenzhen, Guangdong 518057 (CN)
(74) Representative: Baudler, Ron
(86) International application number: PCT/CN2019/093726
(87) International publication number: WO 2020/007246

(56) References cited:
- CN-A- 101 616 338
- CN-A- 101 616 338
- CN-A- 102 316 388
- CN-A- 106 454 558
- JP-A- 2007 158 962
- US-A1- 2010 067 910
- NABIL BITAR(ED) VERIZON SANJAY WADHWA (ED) ALCATEL-LUCENT THOMAS HAAG DEUTSCHE TELEKOM HONGYU LI HUAWEI TECHNOLOGIES: "Applicability of Access Node Control Mechanism to PON based Broadband Networks; draft-ietf-ancp-pon-05.txt", APPLICABILITY OF ACCESS NODE CONTROL MECHANISM TO PON BASED BROADBAND NETWORKS; DRAFT-IETF-ANCP-PON-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 February 2013 (2013-02-24), pages 1 - 42, XP015092422
- SHUAI ZHANG ET AL: "Efficient transport of packets with multicast mechanism in GPON", DIGITAL CONTENT, MULTIMEDIA TECHNOLOGY AND ITS APPLICATIONS (IDC), 2010 6TH INTERNATIONAL CONFERENCE ON, IEEE, PISCATAWAY, NJ, USA, 16 August 2010 (2010-08-16), pages 145 - 149, XP031751259, ISBN: 978-1-4244-7607-7
- DAVE HOOD ERICSSON AB SWEDEN: "Draft Amendment 1 to Recommendation ITU-T G.988 (2010) (for consent);TD 371 (PLEN/15)", ITU-T DRAFT ; STUDY PERIOD 2009-2012, INTERNATIONAL TELECOMMUNICATION UNION, GENEVA ; CH, vol. 2/15, 6 January 2011 (2011-01-06), pages 1 - 41, XP017569068

## Description

### Field of the Invention

The present disclosure relates to but is not limited to the technical field of communications.

### Background of the Invention

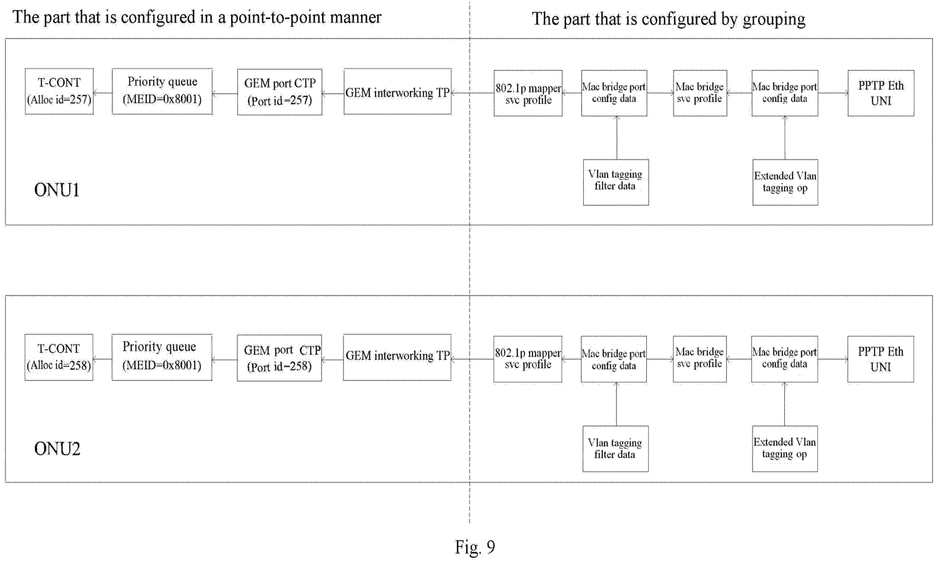

With the maturity of FTTx (Fiber-To-The-x) technology, the capacity of a PON (Passive Optical Network) system is becoming larger and larger, and operations need to be managed in the system are also increased geometrically. However, in a current PON system, an OLT (Optical Line Terminal) manages ONUs (Optical Network Unit) using a stop-and-wait protocol, and manages, except a small number of OAM (Operation Administration and Maintenance) operations that are issued by the OLT in a broadcast manner, all other operations in a point-to-point manner. The document CN101616338 A1 provides a method, system, and corresponding OLT, ONU equipment that can support a high branch ratio, that is, a data transmission of a point-to-multipoint optical access system that supports more ONUs. According to the ONU registry, the OLT encapsulates the data and control information of ONUs with the same group number in a GTC frame, fills the group number in the GTC frame identification field, and sends it out. The ONU's grouping is performed during its registration by the OLT and there is no negotiation between the OLT and the ONU's. Document "Applicability of Access Node Control Mechanism to PON based Broadband Networks", Authors: NABIL BITAR(ED) VERIZON SANJAY WADHWA (ED) ALCATEL-LUCENT THOMAS HAAG DEUTSCHE TELEKOM HONGYU LI HUAWEI TECHNOLOGIES published in INTERNET ENGINEERING TASK FORCE, IETF; STANDARD WORKING DRAFT, INTERNET SOCIETY (ISOC) 4, RUE DES FALAISES CH- 1205 GENEVA, SWITZERLAND, provides applicability of the Access Node Control mechanism to Passive Optical Network (PON)-based broadband access. The need for an Access Node Control mechanism between a Network Access Server (NAS) and an Access Node Complex (a combination of Optical Line Termination (OLT) and Optical Network Termination (ONT) elements) is described in a multi-service reference architecture in order to perform QoS-related, service-related and Subscriber-related operations (see in particular 6.1. Multicast Conditional Access and 6.2 Multicast Admission Control and pg. 26 and 32, Fig. 9). The OLT receives an IGMP request from a subscriber and it performs admission control. There is no real negotiation between the ONU, accepting to belong to a group, and the OLT. Document "Efficient transport of packets with multicast mechanism in GPON" SHUAI ZHANG ET AL published in DIGITAL CONTENT, MULTIMEDIA TECHNOLOGY AND ITS APPLICATIONS (IDC), 2010 6TH INTERNATIONAL CONFERENCE ON, IEEE, PISCATAWAY, NJ, USA, discloses Multicast deployment in GPON system (see, in particular, B. Multicast Deployment in GPON System). Table 1 and 2 show the structures of the multicast tables for the ONU and OLT respectively and only the OLT uses the GEM Port-ID, associated to a MAC address of the ONU, for registering a group.

### Summary of the Invention

According to an embodiment of the present disclosure, it is provided a method for managing ONUs according to claim 1.

According to an embodiment of the present disclosure, it is provided an OLT according to claim 4.

According to an embodiment of the present disclosure, it is provided a method for managing ONUs according to claim 5.

According to an embodiment of the present disclosure, it is provided an ONU according to claim 8.

According to an embodiment of the present disclosure, it is provided a passive optical network system according to claim 9.

According to an embodiment of the present disclosure, it is provided a computer-readable storage medium according to claim 10.

### Brief Description of the Drawings

Fig. 1 is a schematic flowchart of a method for managing ONUs according to an embodiment of the present disclosure.
Fig. 2 is another schematic flowchart of the method for managing ONUs according to the embodiment of the present disclosure.
Fig. 3 is a schematic structural diagram of an OLT according to an embodiment of the present disclosure.
Fig. 4 is a schematic flowchart of another method for managing ONUs according to an embodiment of the present disclosure.
Fig. 5 is another schematic flowchart of said another method for managing ONUs according to the embodiment of the present disclosure.
Fig. 6 is a schematic structural diagram of an ONU according to an embodiment of the present disclosure.
Fig. 7 is a schematic flowchart of further another method for managing ONUs according to an embodiment of the present disclosure.
Fig. 8 is a schematic structural diagram of a passive optical network system according to an embodiment of the present disclosure.
Fig. 9 is a schematic structural diagram of a data traffic model constructed with standard entities according to an embodiment of the present disclosure.
Fig. 10 is a schematic diagram of a timing sequence of a passive optical network system according to an embodiment of the present disclosure.
Fig. 11 is a schematic structural diagram of a GEM header in a GTC frame payload defined by the ITU-T Recommendation G.984.3.

### Detailed Description of the Embodiments

The technical problems to be solved by, and technical solutions and beneficial effects of the present disclosure will become more clear and apparent from the following detailed description with reference to the accompanying drawings and embodiments. It shall be appreciated that specific embodiments described herein are intended only to explain, rather than limit, the present disclosure.

In a current PON system, an OLT manages ONUs using a stop-and-wait protocol, and manages, except a small number of OAM operations that are issued by the OLT in a broadcast manner, all other operations in a point-to-point manner. In such a management mechanism and system scale, once large-scale going-online (such as OLT restarting) or batch activation (such as new opening of ONUs in batches) or batch system upgrading (such as simultaneous upgrading of a plurality of ONUs) occurs, the number of various OAM operations in the system will increase exponentially, resulting in a huge load on bandwidth and the OLT of the system.

In view of this, the embodiments of the present disclosure provide a method for managing ONUs, an OLT, an ONU, a passive optical network system, and a computer-readable storage medium to solve the problem of a huge load on bandwidth and an OLT of a PON system caused by increase in the number of various OAM operations in the system.

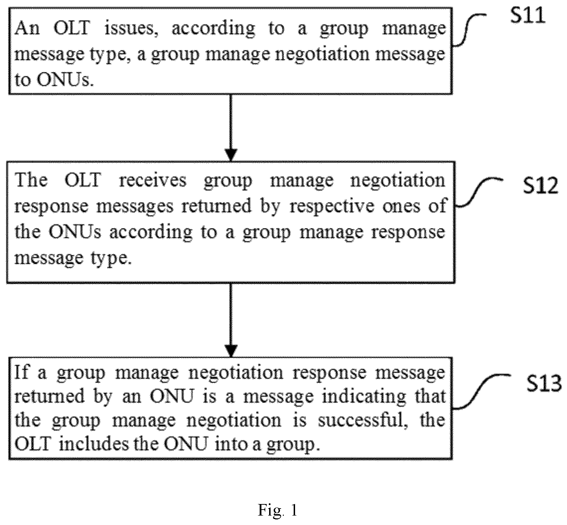

As shown in Fig. 1, an embodiment of the present disclosure provides a method for managing ONUs. The method may be used in an OLT and may include steps S11 to S13.

In step S11, the OLT issues, according to a group manage message format, a group manage negotiation message to the ONUs.

According to the embodiment provided by the present disclosure, as a supplementary management method to the current standard, considering system compatibility, negotiation is performed at the beginning of group management to determine that the system supports group management. In addition, when the group management ends or is paused, it is necessary to notify the ONUs of ending or pausing the group management and entering a standard point-to-point management mode.

According to the embodiment provided by the present disclosure, the group manage message format may be a preset group manage message format. In an instance, the group manage message format may be as shown in Table 1.

**Table 1: Group Manage**

| Field | Byte | | | | | | | | | Comments |
|---|---|---|---|---|---|---|---|---|---|---|
| Transaction correlation identifier | 1-2 | | | | | | | | | |
| Message type | 3 | 0 | 1 | 0 | | | | | | DB=0,AR=1,AK=0 bits 5-1:action=Group Manage |
| Device identifier | 4 | 0 | 0 | 0 | 0 | 1 | 0 | 1 | 0 | OMCI=0x0A |
| Managed entity identifier | 5-6 | | | | | | | | | Entity class =0 |
| | 7-8 | | | | | | | | | Group ID(1-15) |
| Message contents | 9 | 0 | 0 | 0 | 0 | 0 | x | x | x | Manage type |
| | | | | | | | | | | 001=Start Group |
| | | | | | | | | | | 010=Pause Group |
| | | | | | | | | | | 011=End Group |
| | 10-40 | | | | | | | | | Zero padding |
| OMCI trailer | 41-48 | | | | | | | | | |

Since a group manage message is a global message and there is no managed entity object, a value of Entity Class is fixed at 0, and an effective value range of a Group ID during group management is 1-15. When Manage Type=001, it means to start current grouping (Start Group); when Manage Type=010, it means to pause current grouping (Pause Group); and when Manage Type=011, it means to end current grouping (End Group), other values are reserved. It shall be noted that the number of ONUs is not limited herein.

In step S12, the OLT receives group manage negotiation response messages returned by respective ones of the ONUs according to a group manage response message format.

According to the embodiment provided by the present disclosure, the ONUs receive the group manage negotiation message issued by the OLT. If an ONU supports the group management, in order to be able to normally receive group manage messages subsequently issued by the OLT, the ONU, before returning a response, needs to create a GEM PORT for receiving the group manage messages and then returns, according to a group manage response message format, a group manage negotiation response message, namely a message indicating that the group manage negotiation is successful, to the OLT. It can be contemplated that if the ONU does not support the group management, the ONU may return a message indicating that the group manage negotiation is not successful to the OLT.

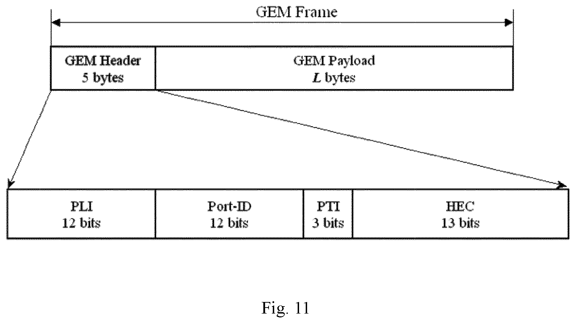

As an example, Fig. 11 is a schematic structural diagram of a GEM header in a GTC (GPON Transmission Convergence Layer) frame payload defined by the ITU-T Recommendation G.984.3, which can create a GEM PORT (Port ID=0) for receiving the group manage message. Since a broadcast mode is adopted over an optical path in a PON system, as long as ONUs that support grouping each have created a GEM PORT with a Port ID being 0, each of these NUNs will receive group manage messages issued by the OLT. This realizes batch issuing of group manage messages.

According to the embodiment provided by the present disclosure, the group manage response message format may be a preset group manage response message format. In an instance, the group manage response message format may be as shown in Table 2.

**Table 2: Group Manage Response**

| Field | Byte | | | | | | | | | Comments |
|---|---|---|---|---|---|---|---|---|---|---|
| Transaction correlation identifier | 1-2 | | | | | | | | | |
| Message type | 3 | | | | | | | | | DB=0,AR=0,AK=1 bits 5-1:action=Group Manage |
| Device identifier | 4 | | | | | | | | | OMCI=0x0A |
| Managed entity identifier | 5-6 | | | | | | | | | Entity class=0 |
| | 7-8 | | | | | | | | | Group ID (1-15) |
| | | | | | | | | | | Result, reason |
| | | | | | | | | | | 0000=command processed successfully |
| | | | | | | | | | | 0001=command processing error |
| | | | | | | | | | | 0010=command not supported |
| Message contents | 9 | | | | | | | | | 0011 =parameter error |
| | | | | | | | | | | 0100=unknown managed entity |
| | | | | | | | | | | 0101=unknown managed entity instance |
| | | | | | | | | | | 0110=device busy |
| | | | | | | | | | | 0111=instance exists |
| | 10 | | | | | | | | | Manage type |
| | | | | | | | | | | 001=Start Group |
| | | | | | | | | | | 010=Pause Group |
| | | | | | | | | | | 011=End Group |
| | 11-12 | | | | | | | | | When B10=010 or 011, an effective value is a value of TCI (Transaction correlation identifier) in a header of a message indicative of an unsuccessful message during current grouping. |
| | | | | | | | | | | ... |
| | 39-40 | | | | | | | | | When B10 =010 or 011, an effective value is a value of TCI in a header of a message indicative of an unsuccessful message during current grouping |
| OMCI trailer | 41-48 | | | | | | | | | Zero padding |

In step S13, if a group manage negotiation response message returned by an ONU is a message indicating that the group manage negotiation is successful, the OLT includes the ONU into a group.

According to the embodiment provided by the present disclosure, as long as the OLT receives a message indicating that the group manage negotiation is successful returned by an ONU, the OLT includes the ONU into the group for management, and issues group manage messages to the ONU included into the group. It can be contemplated that if the OLT receives a message indicating that the group manage negotiation is not successful returned by an ONU, the OLT does not include the ONU into the group for management.

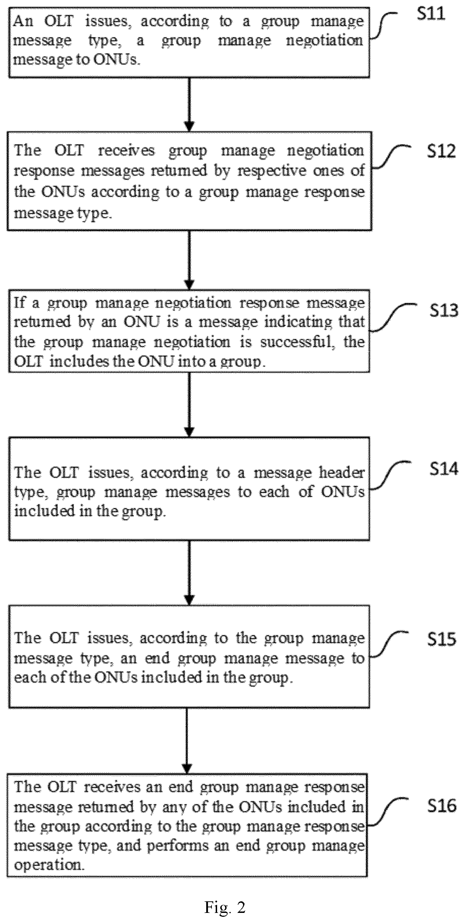

As shown in Fig. 2, according to the embodiment provided by the present disclosure, if a group manage negotiation response message returned by an ONU is a message indicating that the group manage negotiation is successful, after the ONU is included into the group, the method may further include steps S14 to S16.

In step S14, the OLT issues, according to a message header format, group manage messages to each of ONUs included in the group.

According to the embodiment provided by the present disclosure, after the group manage negotiation following the foregoing steps is completed, when performing group management, configurations are issued by the OLT still through various types of standard defined manage messages. However, in order to facilitate an ONU to distinguish group management and point-to-point management that are two different group management modes, and to correctly identify an ID of a current group that is managed to which it belongs, the current standard message header can be modified as shown in Table 3.

**Table 3: Message Header**

| Field | Byte | | | | | | | | | Comments |
|---|---|---|---|---|---|---|---|---|---|---|
| Transaction correlation identifier | 1-2 | | | | | | | | | |
| Message type | 3 | | | | | | | | | DB=0,AR=1,AK=0 bits 5-1:action=standard defined |
| Device identifier | 4 | | | | | | | | | bits 8-5:Group Id, bits 4-1: |
| | | | | | | | | | | 0x0A baseline message |
| | | | | | | | | | | 0x0B Extended message |
| Managed entity identifier | 5-6 | | | | | | | | | Entity class |
| | 7-8 | | | | | | | | | Entity instance |

Upper 4-bits of the Device identifier field in the message header are used to store a Group ID to which a current message belongs (this ID number is determined during the group manage negotiation). If the various messages received by the ONUs carry a valid Group ID, the ONUs do not need to immediately send a response to the OLT according to the stop-and-wait protocol, but perform check and caching until an end group operation is received.

In step S15, the OLT issues, according to the group manage message format, an end group manage message to each of the ONUs included in the group.

According to the embodiments provided by the present disclosure, referring to Table 1, when Manage type=011, it means to end the current grouping.

According to the embodiment provided by the present disclosure, each of the ONUs included in the group receives an end group manage message issued by the OLT, and returns, according to the aforementioned group manage response message format, an end group manage response message to the OLT.

According to the embodiment provided by the present disclosure, each of the ONUs checks whether a message indicating that the group management is not successful exists during the current grouping. If a message indicating that the group management is not successful exists during the current grouping, the ONU returns, according to the group manage response message format, the message indicating that the group management is not successful to the OLT; otherwise, the ONU returns a message indicating that the group management is successful to the OLT. The message indicating that the group management is not successful carries a TCI (Transaction Correlation Identifier) in the message header format.

Referring to Table 2, when the group management is successful, in a returned message indicating that the group management is successful, Result=0000, which means success. If one or more messages indicating that the group management is not successful (including various standard defined error types), then a TCI value (or TCI values) in the message(s) indicating that the group management is not successful is returned by being carried in the 11-40 bytes of the format described in Table 2. At most fifteen groups of TCIs can be returned.

In step S16, the OLT receives an end group manage response message returned by any of the ONUs included in the group according to the group manage response message format, and performs an end group manage operation.

According to the embodiment provided by the present disclosure, the step of the OLT receiving an end group manage response message returned by any of the ONUs included in the group according to the group manage response message format, and performing an end group manage operation, may include: ending, if the received end group manage response message is a message indicating that the group management is successful, the group management; reissuing, if the received end group manage response message is a message indicating that the group management is not successful and a number of TCIs carried in the message indicating that the group management is not successful is less than a preset threshold, group manage messages corresponding to respective ones of the TCIs one by one in a point-to-point manner; reissuing, if the received end group manage response messages is a message indicating that the group management is not successful and a number of TCIs carried in the message indicating that the group management is not successful is not less than a preset threshold, all group manage messages in the current group in a point-to-point manner.

As an example, if the number of the TCIs is less than fifteen, then group manage messages corresponding to the TCIs of the failed part are reissued one by one in a point-to-point manner; if the number of the returned TCIs is equal to fifteen, the group manage messages for all configurations are reissued to the ONU in a point-to-point manner.

The method for managing ONUs provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

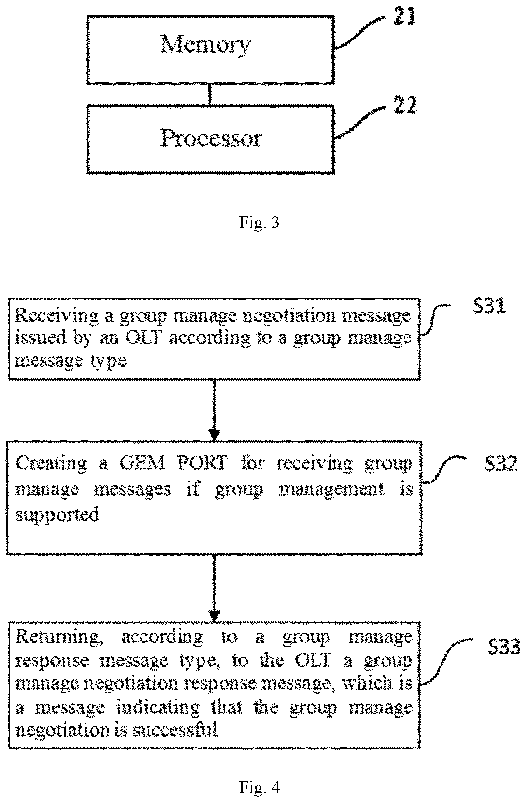

As shown in Fig. 3, an embodiment of the present disclosure provides an OLT, which may include: a memory 21, a processor 22, and a program stored on the memory 21 and executable on the processor 22 for managing ONUs. The program for managing ONUs, when executed by the processor 22, may implement the following steps of a method for managing ONUs: issuing, according to a group manage message format, a group manage negotiation message to the ONUs; receiving group manage negotiation response messages returned by respective ones of the ONUs according to a group manage response message format; and including, in response to a group manage negotiation being successful, an ONU into a group.

According to the embodiment provided by the present disclosure, the program for managing ONUs, when executed by the processor 22, may also implement the following steps of the method for managing ONUs: issuing, according to a message header format, group manage messages to each of ONUs included in the group.

According to the embodiment provided by the present disclosure, the program for managing ONUs, when executed by the processor 22, may further implement the following steps of the method for managing ONUs: issuing, according to the group manage message format, an end group manage message to each of the ONUs included in the group; and receiving an end group manage response message returned by any of the ONUs included in the group according to the group manage response message format, and performing an end group manage operation.

According to the embodiment provided by the present disclosure, the program for managing ONUs, when executed by the processor 22, may further implement the following steps of the method for managing ONUs: ending, in response to determining that the end group manage response message is a message indicating that group management is successful, the group management; issuing, in response to determining that the end group manage response message is a message indicating that the group management is not successful and that a number of TCIs carried in the message indicating that the group management is not successful is less than a preset threshold, group manage messages corresponding to respective ones of the TCIs one by one in a point-to-point manner; and reissuing, in response to determining that the end group manage response message is a message indicating that the group management is not successful and that a number of TCIs carried in the message indicating that the group management is not successful is not less than a preset threshold, all group manage messages in the current group in a point-to-point manner.

The OLT provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

As shown in Fig. 4, an embodiment of the present disclosure provides another method for managing ONUs. The method may be used in ONUs and may include steps S31 to S33.

In step S31, a group manage negotiation message issued by an OLT according to a group manage message format is received.

According to the embodiment provided by the present disclosure, as a supplementary management method to the current standard, considering system compatibility, negotiation is performed at the beginning of group management to determine that the system supports group management. In addition, when the group management ends or is paused, it is necessary to notify the ONUs of ending or pausing the group management and entering a standard point-to-point management mode.

According to the embodiment provided by the present disclosure, the group manage message format may be as shown in Table 1.

Since a group manage message is a global message and there is no managed entity object, a value of Entity Class is fixed at 0, and an effective value range of a Group ID during group management is 1-15. When Manage Type=001, it means to start current grouping (Start Group); when Manage Type=010, it means to pause current grouping (Pause Group); and when Manage Type=011, it means to end current grouping (End Group), other values are reserved.

In step S32, if the group management is supported, a GEM PORT for receiving group manage messages is created.

In step S33, a group manage negotiation response message is returned to the OLT according to a group manage response message format. The group manage negotiation response message is a message indicating that the group manage negotiation is successful.

According to the embodiment provided by the present disclosure, the ONUs receive the group manage negotiation message issued by the OLT. If an ONU supports the group management, in order to be able to normally receive group manage messages subsequently issued by the OLT, the ONU, before returning a response, needs to create a GEM PORT for receiving the group manage messages and then returns, according to a group manage response message format, a group manage negotiation response message, namely a message indicating that the group manage negotiation is successful, to the OLT. It can be contemplated that if the ONU does not support the group management, the ONU can return a message indicating that the group manage negotiation is not successful to the OLT.

As an example, Fig. 11 is a schematic structural diagram of a GEM header in a GTC frame payload defined by the ITU-T Recommendation G.984.3, which can create a GEM PORT (Port ID=0) for receiving group manage messages. Since a broadcast mode is adopted over an optical path in a PON system, as long as ONUs that support grouping each have created a GEM PORT with a Port ID being 0, each of these NUNs will receive group manage messages issued by the OLT. This realizes batch issuing of group manage messages.

According to the embodiment provided by the present disclosure, the group manage response message format may be as shown in Table 2.

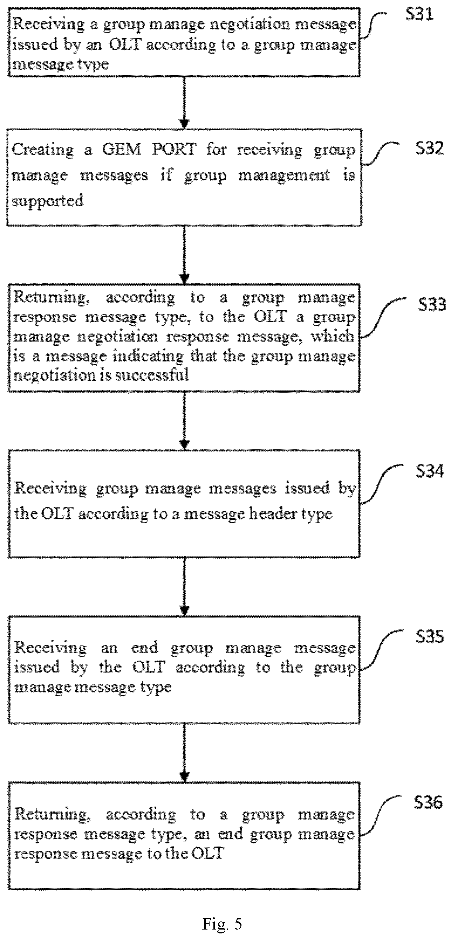

Referring to Fig. 5, in an embodiment provided by the present disclosure, after step S33 of returning, according to a group manage response message format, a group manage negotiation response message to the OLT, the method may further include step S34.

In step S34, group manage messages issued by the OLT according to a message header format are received.

According to the embodiment provided by the present disclosure, as long as the OLT receives a message indicating that the group manage negotiation is successful returned by an ONU, the OLT includes the ONU into the group for management, and issues group manage messages to the ONU included in the group. It can be contemplated that if the OLT receives a message indicating that the group manage negotiation is not successful returned by an ONU, the OLT does not include the ONU into the group for management.

According to the embodiment provided by the present disclosure, when performing group management, configurations are issued by the OLT still through various types of standard defined manage messages. However, in order to facilitate an ONU to distinguish group management and point-to-point management that are two different group management modes, and to correctly identify an ID of a current group that is managed to which it belongs, the current standard message header can be modified as shown in Table 3.

Upper 4-bits of the Device identifier field in the message header are used to store a Group ID to which a current message belongs (this ID number is determined during the group manage negotiation). If the various messages received by the ONUs carry a valid Group ID, the ONUs do not need to immediately send a response to the OLT according to the stop-and-wait protocol, but perform check and caching until an end group operation is received.

Referring again to Fig. 5, in another embodiment provided by the present disclosure, after step S34 of receiving group manage messages issued by the OLT according to a message header format, the method may further include steps S35 to S36.

In step S35, an end group manage message issued by the OLT according to the group manage message format is received.

In step S36, an end group manage response message is returned to the OLT according to a group manage response message format.

According to the embodiment provided by the present disclosure, step S36 of returning, according to a group manage response message format, an end group manage response message to the OLT, may include: returning, if a message indicating that group management is not successful exists during current grouping, and according to the group manage response message format, the message indicating that the group management is not successful to the OLT, wherein the message indicating that the group management is not successful carries a TCI in the message header format; and returning, if a message indicating that the group management is successful exists during the current grouping, the message indicating that the group management is successful to the OLT.

The method for managing ONUs provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

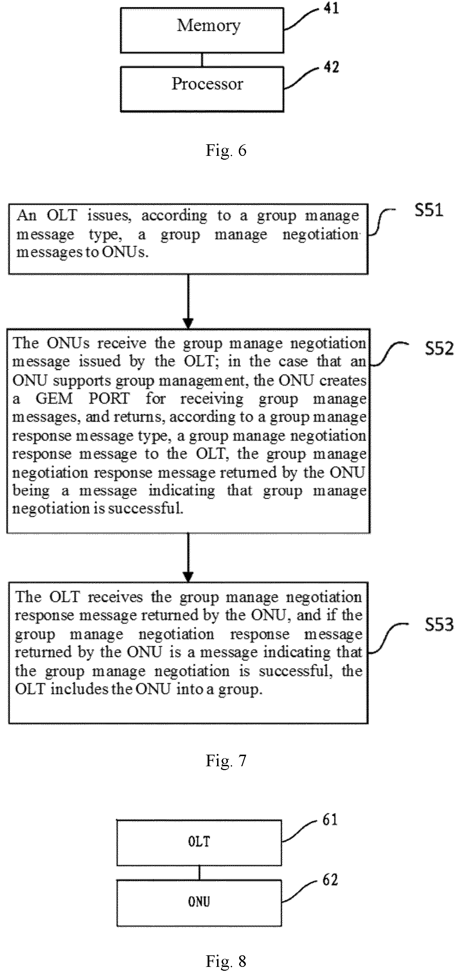

As shown in Fig. 6, an embodiment of the present disclosure provides an ONU, which may include: a memory 41, a processor 42, and a program stored on the memory 41 and executable on the processor 42 for managing ONUs. The program for managing the ONUs, when executed by the processor 42, may implement the following steps of a method for managing ONUs: receiving a group manage negotiation message issued by an OLT according to a group manage message format; creating, in response to determining that the ONU per se supports group management, a GEM PORT for receiving group manage messages; and returning, according to a group manage response message format, a group manage negotiation response message to the OLT. The group manage negotiation response message is a message indicating that group manage negotiation is successful.

According to the embodiment provided by the present disclosure, the program for managing ONUs, when executed by the processor 42, may also implement the following step of the method for managing ONUs: receiving group manage messages issued by the OLT according to a message header format.

According to the embodiment provided by the present disclosure, the program for managing ONUs, when executed by the processor 42, may further implement the following steps of the method for managing ONUs: receiving end group manage messages issued by the OLT according to the group manage message format; and returning, according to a group manage response message format, an end group manage response message to the OLT.

According to the embodiment provided by the present disclosure, the program for managing ONUs, when executed by the processor 42, may further implement the following steps of the method for managing ONUs: returning, if a message indicating that group management is not successful exists during current grouping, and according to the group manage response message format, the message indicating that the group management is not successful to the OLT, wherein the message indicating that the group management is not successful carries a TCI in the message header format; and returning, if a message indicating that the group management is successful exists during the current grouping, the message indicating that the group management is successful to the OLT.

The ONU provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

As shown in Fig. 7, an embodiment of the present disclosure provides a method for managing ONUs, which may include steps S51 to S53.

In step S51, an OLT issues, according to a group manage message format, a group manage negotiation messages to the ONUs.

In step 52, the ONUs receive the group manage negotiation message issued by the OLT; if an ONU supports group management, the ONU creates a GEM PORT for receiving group manage messages, and returns, according to a group manage response message format, a group manage negotiation response message to the OLT. The group manage negotiation response message returned by the ONU is a message indicating that group manage negotiation is successful.

In step S53, the OLT receives the group manage negotiation response message returned by the ONU, and if the group manage negotiation response message returned by the ONU is a message indicating that the group manage negotiation is successful, the OLT includes the ONU into a group.

In order to facilitate a better understanding of the embodiment, the following describes two scenarios, i.e., batch management of data traffic constructed with standard entities, and batch issuing of software version upgrade by means of grouping.

As shown in Fig. 9, a data traffic model constructed with standard entities is provided. The two ONUs (there are far more than two ONUs in practical applications, and here the two ONUs are provided only for ease of explanation) in the figure have exactly same traffic configurations, and therefore can be managed in a batch by configuring through grouping. A specific process will be described below.

An OLT confirms the traffic configurations of each of the ONUs, in which a part involving different PON TC (Transmission Convergence) layer parameters, such as an Alloc id of T-Cont, and a GEM PORT id, cannot be managed by means of grouping because key feature parameters are different, and a part not involving feature parameters of the PON TC layer can be managed by means of grouping.

For the part that cannot be managed by means of grouping, the OLT manages ONU1 and ONU2 and issues manage messages in a standard defined point-to-point mode. Taking ONU1 as an example, manage messages related to entities namely T-CONT, Priority queue, GEM port CTP, and GEM interworking TP are issued.

For the part that can be managed by means of grouping, the OLT starts a group manage operation by starting a group manage negotiation with Group id=1 which is realized by issuing a group manage negotiation message to ONU1 according to a preset group manage message format.

If ONU1 does not support group management, ONU1 returns, according to a preset group manage response message format, a response message indicating that ONU1 does not support group management to the OLT; otherwise, ONU1 creates a GEM Port with GEM port id=0 and returns a response message indicating that the group manage negotiation is successful to the OLT. If ONU1 returns a response message indicating that ONU1 does not support group management to the OLT, the OLT does not include ONU1 into a group. If ONU1 returns a message indicating that the group manage negotiation is successful, which means that ONU1 supports group management, the OLT includes ONU1 into the group with Group id=1. This is the same in case of ONU2.

The OLT issues, according to a preset message header format, to the ONUs (ONU1 and ONU2) in the group with Group id=1 a manage message related to 802.1p mapper service profile entity in a broadcast manner using a group management method. All the ONUs (ONU1 and ONU2) in the group with Group id=1 receive this configuration message from the GEM Port with GEM port id=0, and perform pre-check and caching without responding to the OLT.

After all configurations in the group are issued, an end group manage message is issued to all the ONUs in the group according to a group manage message format. After ONU1 receives the end group manage message, ONU1 checks whether a message indicating that the group management is not successful exists during the grouping, and returns a TCI value in a corresponding message header to the OLT if a message indicating that the group management is not successful exists; and if all messages are messages indicating that the group management is successful, the OLT returns a response message indicating that the group management is successful.

The OLT receives the response message from ONU1. If the response message is a message indicating that the group management is successful, the OLT ends the group management. If failed TCIs exist and the number of these TCIs is less than fifteen, the OLT reissues, according to serial numbers of the failed TCIs returned by ONU1, messages corresponding to respective ones of the TCIs one by one to the ONU1 in a standard point-to-point manner; and ONU1 returns responses one by one to the OLT according to a standard definition. If failed TCIs exist and the number of these TCIs is equal to or more than fifteen, in order to ensure data consistency, the OLT first performs a MIB Reset operation on ONU1 to clear configurations that have been issued, and then reissues all the configurations in a standard point-to-point manner; and ONU1 returns responses one by one to the OLT according to a standard definition.

In another scenario, software version upgrade is issued in batches by grouping to realize the function of batch management of multiple ONUs. A specific process will be described below.

An OLT includes, according to upgrade requirements, all ONUs with a same target software version into a group to be upgraded.

The OLT starts a group manage operation by starting a group manage negotiation with Group id=1 which is realized by issuing a group manage negotiation message to ONU1 according to a preset group manage message format.

If ONU1 does not support group management, ONU1 returns a response message indicating that ONU1 does not support group management to the OLT; otherwise, ONU1 creates a GEM Port with GEM port id=0 and returns a response message indicating that the group manage negotiation is successful to the OLT. If ONU1 returns a response message indicating that ONU1 does not support group management, the OLT does not include ONU1 into a group. If ONU1 returns a message indicating that the group manage negotiation is successful, which means that ONU1 supports group management, the OLT includes ONU1 into the group with Group id=1. This is the same in case of ONU2.

The OLT issues, according to a preset message header format, to the ONUs (ONU1 and ONU2) in the group with Group id=1 a manage message related to software version upgrade in a broadcast manner using a group management method. All the ONUs (ONU1 and ONU2) in the group with Group id=1 receive this configuration message from the GEM Port with GEM port id=0, and perform pre-check and caching without responding to the OLT.

After all configurations in the group are issued, an end group manage message is issued to all the ONUs in the group according to a preset group manage message format. After ONU1 receives the end group manage message, ONU1 checks whether a message indicating that the group management is not successful exists during the grouping, and returns a TCI value in a corresponding message header to the OLT if a message indicating that the group management is not successful exists; and if all messages are messages indicating that the group management is successful, the OLT returns a response message indicating that the group management is successful.

The OLT receives the response message from ONU1. If the response message is a message indicating that the group management is successful, the OLT ends the group management. If failed TCIs exist and the number of these TCIs is less than fifteen, the OLT reissues, according to serial numbers of the failed TCIs returned by the OLT, version file segments corresponding to respective ones of the TCIs one by one to the ONU1 in a standard point-to-point manner; and ONU1 returns responses as per the segments one by one to the OLT according to a standard definition. If failed TCIs exist and the number of these TCIs is equal to or more than fifteen, in order to ensure integrity of the version file, the OLT reinitiates a complete software version upgrade process to ONU1 in a standard point-to-point manner until the upgrade is completed.

The method for managing ONUs provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

As shown in Fig. 8, an embodiment of the present disclosure provides a passive optical network system, which may include an optical line terminal OLT61 and an optical network unit ONU62.

The OLT61 is configured to issue, according to a group manage message format, a group manage negotiation message to the ONU62, receive a group manage negotiation response message returned by the ONU61, and include, if the group manage negotiation response message returned by the ONU62 is a message indicating that the group manage negotiation is successful, the ONU62 into a group.

ONU62 is configured to receive the group manage negotiation message issued by the OLT61, create, if ONU62 per se supports group management, a GEM PORT for receiving group manage messages, and return, according to a group manage response message format, the group manage negotiation response message to OLT61. The group manage negotiation response message returned by ONU 62 is a message indicating that the group manage negotiation is successful.

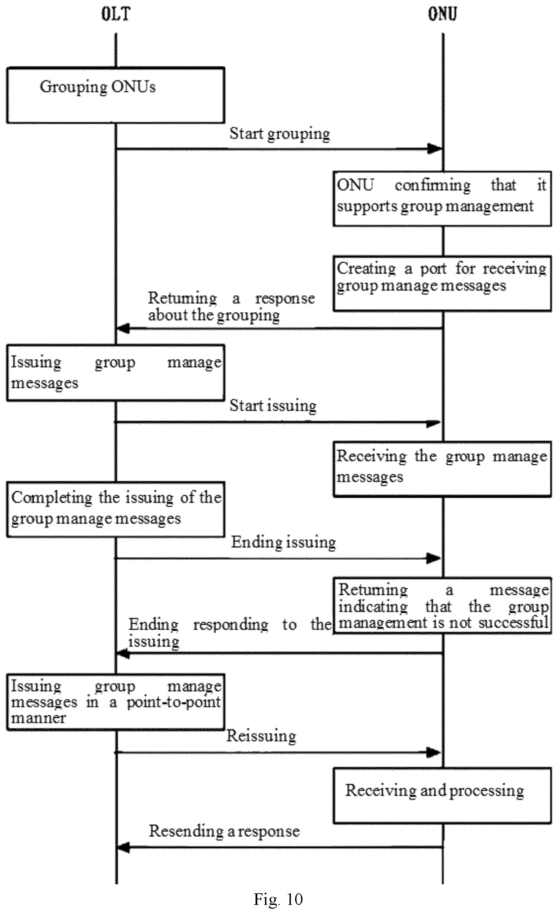

In order to facilitate a better understanding of the embodiment, the following describes a timing relationship between an OLT and ONUs with reference to Fig. 10.

The OLT groups the ONUs. If an ONU supports group management, the ONU creates a port for receiving group manage messages, i.e., creating a GEM Port with GEM port id=0, and returns a response message indicating that the grouping is successful to the OLT.

The OLT starts to issue group manage messages to the ONU, and the ONU receives the group manage messages from the GEM Port with GEM port id=0.

If the issuing of the group manage messages is completed, the OLT issues an end group manage message to the ONU. If a message indicating that the group management is not successful, the ONU returns the message indicating that the group management is not successful.

The OLT reissues the group manage messages in a standard point-to-point manner, and the ONU receives and processes the group manage messages.

The passive optical network system provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

An embodiment of the present disclosure provides a computer-readable storage medium which stores thereon a program for managing ONUs. The program for managing ONUs, when executed by a processor, may implement steps of any one of the methods for managing ONUs as described in the embodiments of the present disclosure.

The computer-readable storage medium provided by the embodiment of the present disclosure, by including similar management operations of multiple ONUs into a same group for management and issuing same group manage messages, can solve the problem of a huge load on bandwidth and an OLT of a PON system caused by increase in the number of various OAM operations in the system. In this way, the OAM operations in the system can be reduced, bandwidth resources can be saved, and the management performance of the system can be improved.

It shall be noted that the devices and methods provided in the embodiments of the present disclosure belong to a same inventive concept. Processes for specific implementation of these devices and methods can be seen in the embodiments of the present disclosure. The technical features in the process embodiments may be similarly applicable to the device embodiments, which will not be described herein again in detail.

With the foregoing description of the embodiments, those skilled in the art may clearly understand that the methods of the above embodiments may be implemented by means of software plus necessary general hardware platforms, and may also be implemented by means of hardware, but in most cases the former is preferred. Based on such an understanding, the technical solutions of the present disclosure in essence or those parts of the technical solutions that contribute to the existing technologies may be embodied in the form of a software product. Such a computer software product may be stored in a storage medium (such as ROM/RAM, magnetic disc, optical disc) and include a plurality of instructions to enable a terminal device (which may be a mobile phone, a computer, a server, an air conditioner, or a network device, etc.) to execute the method described in each of the embodiments of the present disclosure.

The above is a description of preferred embodiments of the present disclosure with reference to the accompanying drawings, and the scope of rights of the present disclosure is not limited thereby. The scope of protection of the present invention is set out by the present claims.

## Claims

1. A method for managing optical network units, ONUs, **characterized by** comprising:
issuing (S11), according to a group manage message format, a group manage negotiation message to each of the ONUs to be managed in batches;
receiving (S12) group manage negotiation response messages returned by each of the ONUs according to a group manage response message format when receiving the group manage negotiation message; and
including (S13), in response to a group manage negotiation being successful, a respective one of the ONUs into a group, wherein a message indicating that the group manage negotiation is successful is returned by the respective ONU if the ONU supports group management and has created a passive optical network encapsulation method port, GEM PORT, for receiving group manage messages, and wherein each of the ONUs in the group has created a respective GEM PORT with a same PORT ID; and
issuing (S14), according to a message header format, group manage messages to each of the ONUs in the group, so that each of the ONUs in the group receives the group manage messages through the respective GEM PORT created with the same PORT ID, thereby realizing batch management for all of the ONUs in the group.

2. The method according to claim 1, wherein after issuing, according to a message header format, group manage messages to each of ONUs in the group, the method further comprises:
issuing, according to the group manage message format, an end group manage message to each of the ONUs in the group; and
receiving an end group manage response message returned by any of the ONUs in the group according to the group manage response message format, and performing an end group manage operation.

3. The method according to claim 2, wherein receiving an end group manage response message returned by any of the ONUs in the group according to the group manage response message format, and performing an end group manage operation, comprises:
ending, in response to determining that the end group manage response message is a message indicating that group management is successful, the group management;
reissuing, in response to determining that the end group manage response message is a message indicating that the group management is not successful, which carries one or more transaction correlation identifiers, TCIs, in the message header format, and that a number of the TCIs is less than a preset threshold, group manage messages corresponding to respective ones of the carried TCIs one by one to the ONU; and
reissuing, in response to determining that the end group manage response message is a message indicating that the group management is not successful and that a number of TCIs carried in the message indicating that the group management is not successful is not less than a preset threshold, all group manage messages in the group to the ONU.

4. An optical line terminal, OLT (61), **characterized by** comprising: a memory (21), a processor (22), and a program stored on the memory and executable on the processor for managing optical network units, ONUs (62), wherein the program for managing ONUs, when executed by the processor, implements steps of the method for managing ONUs according to any one of claims 1 to 3.

5. A method for managing optical network units, ONUs, **characterized by** comprising:
receiving (S31) a group manage negotiation message issued by an optical line terminal, OLT, according to a group manage message format;
creating (S32), in response to determining that an ONU supports group management, a gigabit passive optical network encapsulation method port, GEM PORT, for receiving group manage messages; and
returning, according to a group manage response message format, a group manage negotiation response message to the OLT, so that if the group manage negotiation response message is a message indicating that a group manage negotiation is successful, the OLT includes respective ones of the ONUs into a group, wherein each of the ONUs in the group has created a respective GEM PORT with a same PORT ID;
receiving (S33) group manage messages, issued by the OLT according to a message header format, through the GEM PORTs created respectively with the same PORT ID, thereby realizing batch management by the OLT for all of the ONUs in the group.

6. The method according to claim 5, wherein after receiving group manage messages issued by the OLT according to a message header format, the method further comprises:
receiving an end group manage message issued by the OLT according to the group manage message format; and
returning, according to the group manage response message format, an end group manage response message to the OLT.

7. The method according to claim 6, wherein returning, according to the group manage response message format, an end group manage response message to the OLT, comprises:
returning, in response to determining that a message indicating that group management is not successful exists during current grouping, and according to the group manage response message format, the message indicating that the group management is not successful to the OLT, wherein the message indicating that the group management is not successful carries one or more transaction correlation identifiers, TCIs, in the message header format; and
returning, in response to determining that a message indicating that the group management is successful exists during the current grouping, the message indicating that the group management is successful to the OLT.

8. An optical network unit, ONU (62), **characterized by** comprising: a memory (41), a processor (42), and a program stored on the memory and executable on the processor for managing ONUs, wherein the program for managing ONUs, when executed by the processor, implements steps of the method for managing ONUs according to any one of claims 5 to 7.

9. A passive optical network system, comprising an optical line terminal, OLT (61), and optical network units, ONUs (62), **characterized in that**
the OLT is configured to issue, according to a group manage message format, a group manage negotiation message to each of the ONUs to be managed in batches, receive group manage negotiation response messages returned by each of the ONUs according to a group manage response message format, and include, in response to a group manage negotiation being successful, a respective one of the ONUs into a group;
each of the ONUs is configured to receive the group manage negotiation message issued by the OLT according to the group manage message format, create, in response to determining that the ONU per se supports group management, a gigabit passive optical network encapsulation method port GEM PORT for receiving group manage messages, and return, according to a group manage response message format, a group manage negotiation response message to the OLT, wherein each of the ONUs in the group has created a respective GEM PORT with a same PORT ID;
the OLT is further configured to issue group manage messages to each of the ONUs in the group according to a message header format; and
each of the ONUs in the group is further configured to receive the group manage messages through the respective GEM PORT created with the same PORT ID, thereby realizing batch management for all of the ONUs in the group.

10. A computer-readable storage medium on which a program for managing optical network units, ONUs, is stored, **characterized in that** the program for managing ONUs, when executed by a processor, carries out the method for managing ONUs according to any one of claims 1 to 3 and 5 to 7.

## Patentansprüche

1. Verfahren zum Verwalten von optischen Netzwerkeinheiten, ONUs, **dadurch gekennzeichnet, dass** es Folgendes umfasst:
Ausgeben (SH), gemäß einem Gruppenverwaltungsnachrichtenformat, einer Gruppenverwaltungsverhandlungsnachricht an jede der in Stapeln zu verwaltenden ONUs;
Empfangen (812) von Gruppenverwaltungsverhandlungsantwortnachrichten, die von jeder der ONUs gemäß einem Gruppenverwaltungsantwortnachrichtenformat zurückgegeben werden, wenn die Gruppenverwaltungsverhandlungsnachricht empfangen wird; und
Einschließen (813), als Reaktion darauf, dass eine Gruppenverwaltungsverhandlung erfolgreich ist, einer jeweiligen der ONUs in eine Gruppe, wobei eine Nachricht zum Angeben, dass die Gruppenverwaltungsverhandlung erfolgreich ist, von der jeweiligen ONU zurückgegeben wird, wenn die ONU Gruppenverwaltung unterstützt und einen passiven optischen Netzwerkeinkapselungsverfahren-Anschluss, GEM-Anschluss, zum Empfangen von Gruppenverwaltungsnachrichten erzeugt hat, und wobei jede der ONUs in der Gruppe einen jeweiligen GEM-Anschluss mit einer gleichen Anschluss-ID erzeugt hat; und
Ausgeben (S14), gemäß einem Nachrichtenkopfformat, von Gruppenverwaltungsnachrichten an jede der ONUs in der Gruppe, so dass jede der ONUs in der Gruppe die Gruppenverwaltungsnachrichten über den jeweiligen GEM-Anschluss empfängt, der mit der gleichen Anschluss-ID erzeugt wurde, wodurch Stapelverwaltung für alle ONUs in der Gruppe realisiert wird.

2. Verfahren nach Anspruch 1, wobei nach dem Ausgeben, gemäß einem Nachrichtenkopfformat, von Gruppenverwaltungsnachrichten an jede der ONUs in der Gruppe das Verfahren ferner Folgendes umfasst:
Ausgeben, gemäß dem Gruppenverwaltungsnachrichtenformat, einer Endgruppenverwaltungsnachricht an jede der ONUs in der Gruppe; und
Empfangen einer Endgruppenverwaltungsantwortnachricht, die von einer der ONUs in der Gruppe gemäß dem Gruppenverwaltungsantwortnachrichtenformat zurückgegeben wird, und Durchführen einer Endgruppenverwaltungsoperation.

3. Verfahren nach Anspruch 2, wobei das Empfangen einer Endgruppenverwaltungsantwortnachricht, die von einer der ONUs in der Gruppe gemäß dem Gruppenverwaltungsantwortnachrichtenformat zurückgegeben wird, und Durchführen einer Endgruppenverwaltungsoperation Folgendes umfasst:
Beenden, als Reaktion auf das Bestimmen, dass die Endgruppenverwaltungsantwortnachricht eine Nachricht ist, die angibt, dass Gruppenverwaltung erfolgreich ist, der Gruppenverwaltung;
Wiederausgeben, als Reaktion auf das Bestimmen, dass die Endgruppenverwaltungsantwortnachricht eine Nachricht ist, die angibt, dass die Gruppenverwaltung nicht erfolgreich ist, die eine oder mehrere Transaktionskorrelationskennungen, TCIs, in dem Nachrichtenkopfformat trägt, und dass eine Anzahl der TCIs kleiner als ein voreingestellter Schwellenwert ist, von Gruppenverwaltungsnachrichten entsprechend jeweiligen der getragenen TCIs einzeln an die ONU; und
Wiederausgeben, als Reaktion auf das Bestimmen, dass die Endgruppenverwaltungsantwortnachricht eine Nachricht ist, die angibt, dass die Gruppenverwaltung nicht erfolgreich ist, und dass eine Anzahl von TCIs, die in der Nachricht getragen werden, die angibt, dass die Gruppenverwaltung nicht erfolgreich ist, nicht kleiner als ein voreingestellter Schwellenwert ist, aller Gruppenverwaltungsnachrichten in der Gruppe an die ONU.

4. Optisches Leitungsendgerät, OLT (61), **dadurch gekennzeichnet, dass** es Folgendes umfasst: einen Speicher (21), einen Prozessor (22) und ein Programm, das in dem Speicher gespeichert ist und auf dem Prozessor zum Verwalten von optischen Netzwerkeinheiten, ONUs (62), ausführbar ist, wobei das Programm zum Verwalten von ONUs, wenn es von dem Prozessor ausgeführt wird, Schritte des Verfahrens zum Verwalten von ONUs nach einem der Ansprüche 1 bis 3 implementiert.

5. Verfahren zum Verwalten von optischen Netzwerkeinheiten, ONUs, **dadurch gekennzeichnet, dass** es Folgendes umfasst: Empfangen (S31) einer Gruppenverwaltungsverhandlungsnachricht, die von einem optischen Leitungsendgerät, OLT, gemäß einem Gruppenverwaltungsnachrichtenformat ausgegeben wird;
Erzeugen (S32), als Reaktion auf das Bestimmen, dass eine ONU Gruppenverwaltung unterstützt, eines passiven optischen Netzwerkeinkapselungsverfahren-Anschlusses, GEM-Anschlusses, zum Empfangen von Gruppenverwaltungsnachrichten; und
Zurückgeben, gemäß einem Gruppenverwaltungsantwortnachrichtenformat, einer Gruppenverwaltungsverhandlungsantwortnachricht an das OLT, so dass, wenn die Gruppenverwaltungsverhandlungsantwortnachricht eine Nachricht zum Angeben, dass eine Gruppenverwaltungsverhandlung erfolgreich ist, ist, das OLT jeweilige der ONUs in eine Gruppe einschließt, wobei jede der ONUs in der Gruppe einen jeweiligen GEM-Anschluss mit einer gleichen Anschluss-ID erzeugt hat;
Empfangen (S33) von Gruppenverwaltungsnachrichten, die von dem OLT gemäß einem Nachrichtenkopfformat ausgegeben werden, über die GEM-Anschlüsse, die jeweils mit der gleichen Anschluss-ID erzeugt wurden, wodurch Stapelverwaltung durch das OLT für alle ONUs in der Gruppe realisiert wird.

6. Verfahren nach Anspruch 5, wobei nach dem Empfangen von Gruppenverwaltungsnachrichten, die von dem OLT gemäß einem Nachrichtenkopfformat ausgegeben werden, das Verfahren ferner Folgendes umfasst: Empfangen einer Endgruppenverwaltungsnachricht, die von dem OLT gemäß dem Gruppenverwaltungsnachrichtenformat ausgegeben wird; und
Zurückgeben, gemäß dem Gruppenverwaltungsantwortnachrichtenformat, einer Endgruppenverwaltungsantwortnachricht an das **OLT.**

7. Verfahren nach Anspruch 6, wobei das Zurückgeben, gemäß dem Gruppenverwaltungsantwortnachrichtenformat, einer Endgruppenverwaltungsantwortnachricht an das OLT Folgendes umfasst:
Zurückgeben, als Reaktion auf das Bestimmen, dass eine Nachricht, die angibt, dass Gruppenverwaltung nicht erfolgreich ist, während der aktuellen Gruppierung existiert, und gemäß dem Gruppenverwaltungsantwortnachrichtenformat, der Nachricht, die angibt, dass die Gruppenverwaltung nicht erfolgreich ist, an das OLT, wobei die Nachricht, die angibt, dass die Gruppenverwaltung nicht erfolgreich ist, eine oder mehrere Transaktionskorrelationskennungen, TCIs, in dem Nachrichtenkopfformat trägt; und
Zurückgeben, als Reaktion auf das Bestimmen, dass eine Nachricht, die angibt, dass die Gruppenverwaltung erfolgreich ist, während der aktuellen Gruppierung existiert, der Nachricht, die angibt, dass die Gruppenverwaltung erfolgreich ist, an das OLT.

8. Optische Netzwerkeinheit, ONU (62), **dadurch gekennzeichnet, dass** sie Folgendes umfasst: einen Speicher (41), einen Prozessor (42) und ein Programm, das in dem Speicher gespeichert ist und auf dem Prozessor zum Verwalten von ONUs ausführbar ist, wobei das Programm zum Verwalten von ONUs, wenn es von dem Prozessor ausgeführt wird, Schritte des Verfahrens zum Verwalten von ONUs nach einem der Ansprüche 5 bis 7 implementiert.

9. Passives optisches Netzwerksystem, umfassend ein optisches Leitungsendgerät, OLT (61), und optische Netzwerkeinheiten, ONUs (62), **dadurch gekennzeichnet, dass**
das OLT dafür ausgelegt ist, gemäß einem Gruppenverwaltungsnachrichtenformat eine Gruppenverwaltungsverhandlungsnachricht an jede der in Stapeln zu verwaltenden ONUs auszugeben, Gruppenverwaltungsverhandlungsantwortnachrichten zu empfangen, die von jeder der ONUs gemäß einem Gruppenverwaltungsantwortnachrichtenformat zurückgegeben werden, und als Reaktion darauf, dass eine Gruppenverwaltungsverhandlung erfolgreich ist, eine jeweilige der ONUs in eine Gruppe einzuschließen;
jede der ONUs dafür ausgelegt ist, die Gruppenverwaltungsverhandlungsnachricht zu empfangen, die von dem OLT gemäß dem Gruppenverwaltungsnachrichtenformat ausgegeben wird, als Reaktion auf das Bestimmen, dass die ONU an sich Gruppenverwaltung unterstützt, einen passiven optischen Netzwerkeinkapselungsverfahren-Anschluss, GEM-Anschluss, zum Empfangen von Gruppenverwaltungsnachrichten zu erzeugen und gemäß einem Gruppenverwaltungsantwortnachrichtenformat eine Gruppenverwaltungsverhandlungsantwortnachricht an das OLT zurückzugeben, wobei jede der ONUs in der Gruppe einen jeweiligen GEM-Anschluss mit einer gleichen Anschluss-ID erzeugt hat;
das OLT ferner dafür ausgelegt ist, Gruppenverwaltungsnachrichten an jede der ONUs in der Gruppe gemäß einem Nachrichtenkopfformat auszugeben; und
jede der ONUs in der Gruppe ferner dafür ausgelegt ist, die Gruppenverwaltungsnachrichten über den jeweiligen GEM-Anschluss zu empfangen, der mit der gleichen Anschluss-ID erzeugt wurde, wodurch Stapelverwaltung für alle ONUs in der Gruppe realisiert wird.

10. Computerlesbares Speichermedium, auf dem ein Programm zum Verwalten von optischen Netzwerkeinheiten, ONUs, gespeichert ist, **dadurch gekennzeichnet, dass** das Programm zum Verwalten von ONUs, wenn es von einem Prozessor ausgeführt wird, das Verfahren zum Verwalten von ONUs nach einem der Ansprüche 1 bis 3 und 5 bis 7 ausführt.

## Revendications

1. Procédé pour gérer des unités de réseau optique, ONU, **caractérisé en ce qu'**il comprend les étapes consistant à :
émettre (SH), selon un format de message de gestion de groupe, un message de négociation de gestion de groupe à chacune des ONU à gérer par lots ;
recevoir (812) des messages de réponse de négociation de gestion de groupe renvoyés par chacune des ONU selon un format de message de réponse de gestion de groupe lors de recevoir le message de négociation de gestion de groupe ; et
inclure (813), en réponse à une négociation de gestion de groupe réussie, une ONU respective parmi les ONU dans un groupe, dans lequel un message indiquant que la négociation de gestion de groupe est réussie est renvoyé par l'ONU respective si l'ONU prend en charge la gestion de groupe et a créé un port de procédé d'encapsulation de réseau optique passif, GEM PORT, pour recevoir des messages de gestion de groupe, et dans lequel chacune des ONU dans le groupe a créé un GEM PORT respectif avec un même ID de PORT ; et
émettre (S14), selon un format d'en-tête de message, des messages de gestion de groupe à chacune des ONU dans le groupe, de sorte que chacune des ONU dans le groupe reçoive les messages de gestion de groupe par l'intermédiaire du GEM PORT respectif créé avec le même ID de PORT, réalisant ainsi la gestion par lots pour toutes les ONU dans le groupe.

2. Procédé selon la revendication 1, dans lequel, après émettre, selon un format d'en-tête de message, des messages de gestion de groupe à chacune des ONU dans le groupe, le procédé comprend en outre les étapes consistant à :
émettre, selon le format de message de gestion de groupe, un message de gestion de groupe de fin à chacune des ONU dans le groupe ; et
recevoir un message de réponse de gestion de groupe de fin renvoyé par l'une quelconque des ONU dans le groupe selon le format de message de réponse de gestion de groupe, et réaliser une opération de gestion de groupe de fin.

3. Procédé selon la revendication 2, dans lequel recevoir un message de réponse de gestion de groupe de fin renvoyé par l'une quelconque des ONU dans le groupe selon le format de message de réponse de gestion de groupe, et réaliser une opération de gestion de groupe de fin, comprennent les étapes consistant à :
mettre fin, en réponse à déterminer que le message de réponse de gestion de groupe de fin est un message indiquant que la gestion de groupe est réussie, à la gestion de groupe ;
réémettre, en réponse à déterminer que le message de réponse de gestion de groupe de fin est un message indiquant que la gestion de groupe n'est pas réussie, qui transporte un ou plusieurs identifiants de corrélation de transaction, TCI, dans le format d'en-tête de message, et qu'un nombre des TCI est inférieur à un seuil prédéfini, des messages de gestion de groupe correspondant à des TCI respectifs des TCI transportés un par un à l'ONU ; et
réémettre, en réponse à déterminer que le message de réponse de gestion de groupe de fin est un message indiquant que la gestion de groupe n'est pas réussie et qu'un nombre de TCI transportés dans le message indiquant que la gestion de groupe n'est pas réussie n'est pas inférieur à un seuil prédéfini, tous les messages de gestion de groupe dans le groupe à l'ONU.

4. Terminal de ligne optique, OLT (61), **caractérisé en ce qu'**il comprend : une mémoire (21), un processeur (22), et un programme stocké sur la mémoire et exécutable sur le processeur pour gérer des unités de réseau optique, ONU (62), dans lequel le programme pour gérer des ONU, lorsqu'il est exécuté par le processeur, met en œuvre les étapes du procédé pour gérer des ONU selon l'une quelconque des revendications 1 à 3.

5. Procédé pour gérer des unités de réseau optique, ONU, **caractérisé en ce qu'**il comprend les étapes consistant à : recevoir (S31) un message de négociation de gestion de groupe émis par un terminal de ligne optique, OLT, selon un format de message de gestion de groupe ;
créer (S32), en réponse à déterminer qu'une ONU prend en charge la gestion de groupe, un port de procédé d'encapsulation de réseau optique passif, GEM PORT, pour recevoir des messages de gestion de groupe ; et
renvoyer, selon un format de message de réponse de gestion de groupe, un message de réponse de négociation de gestion de groupe à l'OLT, de sorte que si le message de réponse de négociation de gestion de groupe est un message indiquant qu'une négociation de gestion de groupe est réussie, l'OLT inclut des ONU respectives parmi les ONU dans un groupe, dans lequel chacune des ONU dans le groupe a créé un GEM PORT respectif avec un même ID de PORT ;
recevoir (S33) des messages de gestion de groupe, émis par l'OLT selon un format d'en-tête de message, par l'intermédiaire des GEM PORT créés respectivement avec le même ID de PORT, réalisant ainsi la gestion par lots par l'OLT pour toutes les ONU dans le groupe.

6. Procédé selon la revendication 5, dans lequel, après avoir reçu des messages de gestion de groupe émis par l'OLT selon un format d'en-tête de message, le procédé comprend en outre les étapes consistant à : recevoir un message de gestion de groupe de fin émis par l'OLT selon le format de message de gestion de groupe ; et
renvoyer, selon le format de message de réponse de gestion de groupe, un message de réponse de gestion de groupe de fin à l'OLT.

7. Procédé selon la revendication 6, dans lequel renvoyer, selon le format de message de réponse de gestion de groupe, un message de réponse de gestion de groupe de fin à l'OLT, comprend les étapes consistant à :
renvoyer, en réponse à déterminer qu'un message indiquant que la gestion de groupe n'est pas réussie existe pendant le regroupement en cours, et selon le format de message de réponse de gestion de groupe, le message indiquant que la gestion de groupe n'est pas réussie à l'OLT, dans lequel le message indiquant que la gestion de groupe n'est pas réussie transporte un ou plusieurs identifiants de corrélation de transaction, TCI, dans le format d'en-tête de message ; et
renvoyer, en réponse à déterminer qu'un message indiquant que la gestion de groupe est réussie existe pendant le regroupement en cours, le message indiquant que la gestion de groupe est réussie à l'OLT.

8. Unité de réseau optique, ONU (62), **caractérisée en ce qu'**elle comprend : une mémoire (41), un processeur (42), et un programme stocké sur la mémoire et exécutable sur le processeur pour gérer des ONU, dans lequel le programme pour gérer des ONU, lorsqu'il est exécuté par le processeur, met en œuvre les étapes du procédé pour gérer des ONU selon l'une quelconque des revendications 5 à 7.

9. Système de réseau optique passif, comprenant un terminal de ligne optique, OLT (61), et des unités de réseau optique, ONU (62), **caractérisé en ce que**
l'OLT est configuré pour émettre, selon un format de message de gestion de groupe, un message de négociation de gestion de groupe à chacune des ONU à gérer par lots, recevoir des messages de réponse de négociation de gestion de groupe renvoyés par chacune des ONU selon un format de message de réponse de gestion de groupe, et inclure, en réponse à une négociation de gestion de groupe réussie, une ONU respective parmi les ONU dans un groupe ;
chacune des ONU est configurée pour recevoir le message de négociation de gestion de groupe émis par l'OLT selon le format de message de gestion de groupe, créer, en réponse à déterminer que l'ONU en soi prend en charge la gestion de groupe, un port de procédé d'encapsulation de réseau optique passif, GEM PORT, pour recevoir des messages de gestion de groupe, et renvoyer, selon un format de message de réponse de gestion de groupe, un message de réponse de négociation de gestion de groupe à l'OLT, dans lequel chacune des ONU dans le groupe a créé un GEM PORT respectif avec un même ID de PORT ;
l'OLT est en outre configuré pour émettre des messages de gestion de groupe à chacune des ONU dans le groupe selon un format d'en-tête de message ; et
chacune des ONU dans le groupe est en outre configurée pour recevoir les messages de gestion de groupe par l'intermédiaire du GEM PORT respectif créé avec le même ID de PORT, réalisant ainsi la gestion par lots pour toutes les ONU dans le groupe.

10. Moyen de stockage lisible par ordinateur sur lequel un programme pour gérer des unités de réseau optique, ONU, est stocké, **caractérisé en ce que** le programme pour gérer des ONU, lorsqu'il est exécuté par un processeur, réalise le procédé pour gérer des ONU selon l'une quelconque des revendications 1 à 3 et 5 à 7.
